# EUROPÄISCHE PATENTSCHRIFT

(11) **EP 3 446 606 B1**
(45) Veröffentlichungstag und Bekanntmachung des Hinweises auf die Patenterteilung: **30.09.2020**
(21) Anmeldenummer: 18186937.1
(22) Anmeldetag: 02.08.2018
(51) Int. Cl.: A47L 9/00

(54) **SICH SELBSTTÄTIG FORTBEWEGENDES BODENBEARBEITUNGSGERÄT MIT EINEM STEIGHEBEL**
AUTOMATICALLY MOVING SOIL TILLAGE IMPLEMENT WITH A RISING LEVER
APPAREIL DE TRAITEMENT DU SOL SE DÉPLAÇANT AUTOMATIQUEMENT POURVUE D'UN LEVIER

(30) Priorität: 25.08.2017 DE 102017119591
(43) Veröffentlichungstag der Anmeldung: 27.02.2019
(73) Patentinhaber: Vorwerk & Co. Interholding GmbH, 42275 Wuppertal (DE)
(72) Erfinder: Büsing, Hannes, 51105 Köln (DE)
(74) Vertreter: Müller, Enno

(56) Entgegenhaltungen:
- EP-A1- 0 658 402
- EP-B1- 2 743 038
- CN-U- 203 920 967

## Beschreibung

### Gebiet der Technik

Die Erfindung betrifft ein sich selbsttätig fortbewegendes Bodenbearbeitungsgerät mit einem Gehäuse und einem relativ zu dem Gehäuse verlagerbaren Steighebel zur Überwindung eines Hindernisses, wobei der Steighebel einen Grundkörper und einen Kontaktbereich zur Anlage an dem zu überwindenden Hindernis aufweist und wobei der Steighebel exzentrisch schwenkbar an einerseits einem Rad des Bodenbearbeitungsgerätes und andererseits an dem Gehäuse gelagert ist.

### Stand der Technik

Sich selbsttätig fortbewegende Bodenbearbeitungsgeräte sind im Stand der Technik beispielsweise als mobile Bodenbearbeitungsroboter zum Saugen, Wischen, Polieren, Rasenmähen und dergleichen bekannt.

Die Patentschrift EP 2 743 038 B1 offenbart beispielsweise ein Bodenreinigungsgerät mit angetriebenen Rädern zur selbsttätigen Fortbewegung des Bodenreinigungsgerätes auf einer zu reinigenden Fläche. Damit das Bodenreinigungsgerät auch bodennahe Hindernisse von geringer Höhe, beispielsweise bis zu 20 mm, selbsttätig überfahren kann, weist das Bodenreinigungsgerät einen Steighebel auf, der exzentrisch schwenkbar an einerseits dem Rad und andererseits dem Gehäuse des Bodenreinigungsgerätes gelagert ist, so dass der Steighebel bei unterschiedlichen Rotationsstellungen des Rades verschiedene Positionen und Orientierungen relativ zu dem Rad und Gehäuse des Bodenreinigungsgerätes aufweist und sich dadurch während eines Radumlaufs an einem Hindernis, wie beispielsweise einer Türschwelle, abstützen kann.

Um die Reibung zwischen dem Steighebel und dem zu überwindenden Hindernis zu erhöhen, ist vorgesehen, dass ein Kontaktbereich des Steighebels zur reib- bzw. kraftschlüssigen Zusammenwirkung mit dem Hindernis eine rutschfeste Ausgestaltung aufweist, beispielsweise eine Profilierung oder Verzahnung. Des Weiteren ist die Verwendung eines Weichmaterials, wie beispielsweise Weichgummi oder Weichkunststoff, vorgeschlagen.

### Zusammenfassung der Erfindung

Obwohl sich die vorgenannten Steighebel in der Praxis für selbsttätig verfahrbare Bodenreinigungsgeräte bewährt haben, ist es Aufgabe der Erfindung, die Steighebel weiter zu verbessern, insbesondere dahingehend, dass die Wahrscheinlichkeit einer Überwindung eines Hindernisses, insbesondere bei Geschwindigkeiten von 0,1 m/s oder weniger, erhöht wird.

Zur Lösung dieser Aufgabe wird vorgeschlagen, dass der Kontaktbereich relativ zu dem Grundkörper des Steighebels verlagerbar ist, nämlich schwenkbar an einer Achse des Grundkörpers gelagert ist.

Erfindungsgemäß kann die relative Position und Orientierung des Kontaktbereiches an dem Steighebel variiert werden, so dass ein Winkel des Kontaktbereiches, und damit auch die Größe einer Berührungsfläche auf einem zu überwindenden Hindernis variiert werden kann. Insbesondere ist die Berührungsfläche zwischen dem Kontaktbereich und dem Hindernis nun nicht mehr nahezu linienförmig, sondern vergrößert sich, wenn der Stellwinkel des Kontaktbereiches relativ zu dem Hindernis durch die Verlagerung des Kontaktbereiches gegen Null geht. Kombiniert mit einer Profilierung oder Verformbarkeit des Kontaktbereiches des Steighebels kann die Berührungsfläche darüber hinaus angepasst werden. Indem die Größe der Berührungsfläche bzw. die Anzahl und Größe der Kontaktpunkte (bei profiliertem Kontaktbereich) zwischen dem Steighebel und dem Hindernis vergrößert wird, kann die Zugkraft des Steighebels erhöht werden, was wiederum eine Normalkraft zwischen beispielsweise einem Rad des Bodenbearbeitungsgerätes und einer Kante des Hindernisses erhöht. Somit wird die Kletterfähigkeit des Bodenbearbeitungsgerätes verbessert.

Insbesondere wird vorgeschlagen, dass der Steighebel zwischen dem Kontaktbereich und dem Grundkörper ein eine Federkraft bereitstellendes Federelement aufweist. Gemäß dieser Ausgestaltung wird der Kontaktbereich durch eine Federkraft beaufschlagt, welche den Kontaktbereich relativ zu dem Grundkörper zu verlagern sucht. Das Federelement kann beispielsweise ein elastischer Teilbereich des Grundkörpers und/oder des Kontaktbereiches sein, oder ein separates Federelement, welches zwischen dem Kontaktbereich und dem Grundkörper des Steighebels angeordnet ist. Sofern das Federelement durch das Material des Kontaktbereiches bzw. des Grundkörpers bereitgestellt wird, kann dieses beispielsweise aus einem gummielastischen Material hergestellt sein, beispielsweise einem Zellkautschuk oder einem anderen Elastomer. Des Weiteren ist es aber grundsätzlich auch möglich, dass das Federelement beispielsweise eine Blattfeder, Schenkelfeder, Schraubenfeder oder anderes ist.

Insbesondere wird vorgeschlagen, dass eine Rückstellkraft des Federelementes ausgehend von dem Grundkörper in Richtung des Kontaktbereiches gerichtet ist. Gemäß dieser Ausgestaltung verlagert die Rückstellkraft des Federelementes den Kontaktbereich des Steighebels - bei ansonsten unbelastetem Steighebel - von dem Grundkörper weg. Wenn das Bodenbearbeitungsgerät in üblicher Art und Weise auf einer Fläche steht, wird das Federelement aufgrund der Gewichtskraft des Bodenbearbeitungsgerätes, welche auf dem Steighebel lastet, entgegen seiner Rückstellkraft komprimiert, so dass stets ein optimaler Anpressdruck des Steighebels an einem zu überkletternden Hindernis gegeben ist. Die auf das Hindernis wirkende Rückstellkraft des Federelementes führt somit zusätzlich zu einer Erhöhung der Zugkraft zwischen dem Steighebel und dem Hindernis.

Des Weiteren wird vorgeschlagen, dass der Steighebel zwischen dem Kontaktbereich und dem Grundkörper ein durch mechanische Belastung verformbares Kissenelement aufweist. Das Kissenelement kann beispielsweise ein Luftkissen, ein Gelkissen oder auch ein anderes verformbares Element sein, welches sich unter mechanischer Belastung, insbesondere bei Beaufschlagung mit der Gewichtskraft des Bodenbearbeitungsgerätes, verformt, so dass sich die Position des Kontaktbereiches relativ zu dem Grundkörper des Steighebels verlagert. Das Kissenelement kann beispielsweise beweglich an dem Grundkörper des Steighebels gelagert sein und den Kontaktbereich als integralen Bestandteil aufweisen. Der Kontaktbereich kann andere Materialeigenschaften aufweisen, als die anderen Teilbereiche des Kissenelementes. Beispielsweise kann das Kissenelement in dem Kontaktbereich weniger elastisch ausgebildet sein als in den übrigen Teilbereichen. Des Weiteren kann der Kontaktbereich widerstandsfähiger gegenüber mechanischen Beanspruchungen sein. Dem Kissenelement kann durch den Grundkörper des Steighebels ein Ausbreitungsbereich vorgegeben sein. Dieser Ausbreitungsbereich ist beispielsweise durch fest an dem Grundkörper ausgebildete oder angeordnete Wandelemente begrenzt, welche die Verformung des Kissenelementes in bestimmte Richtungen beschränken. Beispielsweise kann eine erste Ausbreitungsrichtung durch eine Wandung beschränkt sein, so dass sich das Kissenelement hauptsächlich quer dazu ausbreitet, nämlich vorzugsweise in eine Richtung, welche bei einer üblichen Betriebsstellung des Bodenbearbeitungsgerätes parallel zu der zu bearbeitenden Fläche orientiert ist. Dadurch legt sich das Kissenelement mit einer möglichst großen Berührungsfläche auf einen Teilbereich des Hindernisses, so dass die Zugkraft zwischen dem Steighebel und dem Hindernis optimal erhöht werden kann.

Insbesondere wird vorgeschlagen, dass der Kontaktbereich ein flexibles Material aufweist. Dadurch kann der Kontaktbereich möglichst großflächig und formkorrespondierend an einen Teilbereich des Hindernisses angelegt werden. Als flexible Materialien eignen sich insbesondere elastische Materialien, wie beispielsweise Kautschuk.

Gemäß einer Ausführung kann vorgesehen sein, dass der Kontaktbereich des Steighebels ein integraler Teilbereich des Kissenelementes oder Federelementes ist oder fest mit dem Kissenelement oder Federelement verbunden ist. Im Sinne eines Federelementes werden hier Elemente mit federelastischen Eigenschaften verstanden, insbesondere Elemente aus elastischen Materialien. Im Sinne von Kissenelementen werden insbesondere verformbare Elemente verstanden, welche nicht elastisch sein müssen, aber durch Kraftbeaufschlagung verformt werden können, wie beispielsweise Luftkissen oder Gelkissen. Der Kontaktbereich ist vorzugsweise einteilig mit dem Kissenelement bzw. Federelement ausgebildet. Beispielsweise kann das Kissenelement oder Federelement ein Spritzgussteil sein, welches in dem Kontaktbereich andere Materialeigenschaften aufweist als in den übrigen Teilbereichen. Dabei kann das Kissenelement bzw. Federelement nach Wunsch eine, zwei oder drei Komponenten aufweisen. Gegebenenfalls sind auch weitere Komponenten denkbar, wobei dann der Aufwand für die Herstellung erheblich steigt.

Des Weiteren wird vorgeschlagen, dass der Kontaktbereich Teil eines Borstenelementes mit an einem Trägerkörper befestigten Borsten ist, wobei der Trägerkörper und/oder die Borsten elastisch ausgebildet sind und/oder der Trägerkörper ein durch mechanische Belastung verformbares Kissenelement oder Federelement ist. Bei dieser Ausgestaltung weist der Steighebel auf seiner in Richtung der Fläche bzw. des Hindernisses gewandten Seite Borsten auf, die elastisch, flexibel oder starr ausgebildet sein können. Es empfiehlt sich, dass das Borstenelement durch die Eigenschaften des Trägerkörpers und der Borsten einen relativ zu dem Grundkörper des Steighebels verlagerbaren Kontaktbereich bereitstellen kann. Falls die Borsten des Borstenelementes starr ausgebildet sind, empfiehlt es sich, dass der Trägerkörper ein elastisches Material aufweist. Sofern der Trägerkörper starr ausgebildet ist, sollten die Borstenelemente elastisch oder zumindest flexibel ausgebildet sein, so dass diese sich zur Vergrößerung der Berührungsfläche optimal an die Form der Hindernisoberfläche anpassen können. Besonders bevorzugt sind die Borstenelemente so an dem Trägerkörper angeordnet, dass diese entgegen der üblichen Richtung der Fortbewegung des Bodenbearbeitungsgerätes geneigt bzw. neigbar sind und in entgegengesetzte Richtung blockieren, so dass ein Abrutschen des Steighebels von dem Hindernis verhindert oder zumindest erschwert werden kann. Die Borsten des Borstenelementes können zu Borstenbüscheln zusammengefasst sein. Die Borsten können Durchmesser von jeweils beispielsweise 0,1 mm oder 0,2 mm aufweisen. Alternativ kann das Borstenelement auch dickere Streifen mit einer Breite von mehreren Millimetern aufweisen. Die Borsten können aus Kunststoff oder Naturmaterial hergestellt sein. Die freien Endbereiche der Borsten des Borstenelementes bilden den Kontaktbereich des Steighebels. Sofern der Trägerkörper des Weiteren als verformbares Kissenelement oder Federelement ausgebildet ist, können die Borsten starr ausgebildet sein. Die Verlagerbarkeit der freien Borstenenden, d. h. des Kontaktbereiches, ergibt sich dann durch den verformbaren Trägerkörper.

Erfindungsgemäß wird vorgeschlagen, dass der Kontaktbereich schwenkbar an einer Achse des Grundkörpers gelagert ist. Gemäß dieser Ausgestaltung kann der Kontaktbereich beispielsweise Teil eines Elementes sein, welches relativ zu dem Grundkörper verschwenkbar ist, so dass der Winkel zwischen dem Steighebel und dem Hindernis variiert werden kann. Es empfiehlt sich, dem schwenkbaren Teilbereich des Steighebels bzw. dem Kontaktbereich ein Federelement zuzuordnen, welches den Teilbereich bzw. Kontaktbereich in Richtung der Oberfläche des Hindernisses drückt.

Vorteilhaft kann des Weiteren sein, dass das Federelement ein zwischen dem Grundkörper und dem Kontaktbereich angeordneter elastischer Keil ist. Gemäß dieser Ausführung kann der Kontaktbereich von dem Grundkörper beabstandet sein, so dass sich zwischen dem Kontaktbereich und dem Grundkörper ein keilförmiger Bereich ergibt, in welchen ein ebenso keilförmiges Federelement geklemmt werden kann. Das Federelement sorgt dafür, dass der Winkel zwischen dem Kontaktbereich und dem Grundkörper bei Belastung mit dem Gewicht des Bodenbearbeitungsgerätes bzw. Bodenkontakt des Steighebels geändert wird. Die als vorteilhaft vorgeschlagene Schwenkbarkeit des Kontaktbereiches sorgt zudem gegebenenfalls dafür, dass an dem Steighebel eine Krafteinleitungslinie vorhanden ist. Dadurch kann die zwischen dem Steighebel und dem Hindernis erzeugte Kraft übertragen werden und ein Drehpunkt für die Berührungsfläche zwischen dem Steighebel und dem Hindernis bereitgestellt werden. Der elastische Keil kann vorzugsweise aus einem Elastomer hergestellt sein, insbesondere Zellkautschuk.

Schließlich wird eine Ausgestaltung des Bodenbearbeitungsgerätes vorgeschlagen, bei welcher der Steighebel exzentrisch schwenkbar an einerseits einem Rad des Bodenbearbeitungsgerätes und andererseits dem Gehäuse gelagert ist. Gemäß dieser Ausführung wird der Steighebel zeitlich wiederkehrend während der Rotation des Rades relativ zu der zu bearbeitenden Fläche angehoben und abgesenkt, so dass dieser bei der Annäherung des Bodenbearbeitungsgerätes an ein Hindernis auf dieses aufgesetzt werden kann und das Bodenbearbeitungsgerät, insbesondere dessen Räder, auf das Hindernis hebt. Alternativ ist es möglich, dass der Steighebel automatisch mit Hilfe eines Elektromotors oder dergleichen verlagert wird, wenn die Anwesenheit eines Hindernisses vor dem Bodenbearbeitungsgerät festgestellt wird. Eine Steuereinrichtung kann beispielsweise in Abhängigkeit von dem Detektionsergebnis einer Detektionseinrichtung ein zu überwindendes Hindernis erkennen und den Steighebel so steuern, dass dieser möglichst großflächig auf dem Hindernis aufsetzt.

### Kurze Beschreibung der Zeichnungen

Im Folgenden wird die Erfindung anhand von Ausführungsbeispielen näher erläutert. Es zeigen:
- Fig. 1: ein erfindungsgemäßes Bodenbearbeitungsgerät vor einem zu überwindenden Hindernis,
- Fig. 2: eine Seitenansicht eines Rades des Bodenbearbeitungsgerätes mit einem daran angeordneten Steighebel,
- Fig. 3: eine Unteransicht unter einen Teilbereich des Bodenbearbeitungsgerätes mit einem Steighebel gemäß einer ersten Ausführungsform,
- Fig. 4: einen Steighebel gemäß einer zweiten Ausführungsform,
- Fig. 5: einen Steighebel gemäß einer dritten Ausführungsform,
- Fig. 6: einen Steighebel gemäß einer vierten Ausführungsform,
- Fig. 7: einen Steighebel gemäß einer fünften Ausführungsform,
- Fig. 8: einen Steighebel gemäß einer sechsten Ausführungsform.

### Beschreibung der Ausführungsformen

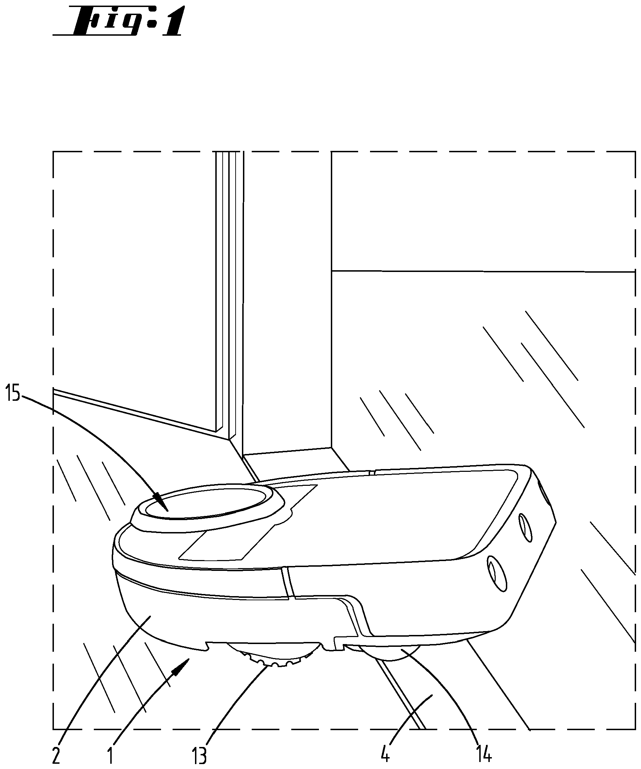

Figur 1 zeigt ein sich selbsttätig fortbewegendes Bodenbearbeitungsgerät 1, welches hier als mobiler Reinigungsroboter ausgebildet ist. Das Bodenbearbeitungsgerät 1 verfügt über ein Gehäuse 2 sowie ein Chassis, welches unterseitig, der zu bearbeitenden Fläche zugewandt, elektromotorisch angetriebene Räder 13 aufweist. Das Chassis ist von dem Gehäuse 2 überfangen. Das Bodenbearbeitungsgerät 1 weist ein bevorzugt elektromotorisch angetriebenes Reinigungselement 14 auf, welches hier eine Borstenwalze zur Bürstbearbeitung einer Fläche ist. Das Reinigungselement 14 durchsetzt in einer bevorzugten Ausführung einen Saugmund, über welchen mittels einer Motor-Gebläse-Einheit Saugluft angesaugt werden kann. Die Elektroversorgung der einzelnen Elektrokomponenten des Bodenbearbeitungsgerätes 1 ist über einen nicht näher dargestellten, wieder aufladbaren Akkumulator erreicht. Das Bodenbearbeitungsgerät 1 weist eine Navigations- und Selbstlokalisierungseinrichtung auf, mittels welcher das Bodenbearbeitungsgerät 1 selbsttätig innerhalb der Umgebung umherfahren und seinen eigenen Standort feststellen kann. Der Navigations- und Selbstlokalisierungseinrichtung ist eine Abstandsmesseinrichtung 15 zugeordnet, welche Abstände zu Hindernissen 4 in der Umgebung misst. Anhand der Abstandsdaten kann eine Umgebungskarte erstellt werden, welche dem Bodenbearbeitungsgerät 1 zur Fortbewegung innerhalb der Umgebung dient. Hier ist die Abstandsmesseinrichtung 15 beispielsweise eine innerhalb des Gehäuses 2 angeordnete Triangulationsmesseinrichtung, welche eine optische Lichtquelle und einen optischen Sensor aufweist. Die Lichtquelle emittiert Licht in die Umgebung des Bodenbearbeitungsgerätes 1. Dieses Licht wird gegebenenfalls an Hindernissen 4 innerhalb der Umgebung reflektiert und gelangt zumindest mit einem Anteil zu dem Sensor der Abstandsmesseinrichtung 15. Anhand des empfangenen Messsignals kann ein Abstand zu dem jeweiligen Hindernis 4 berechnet werden.

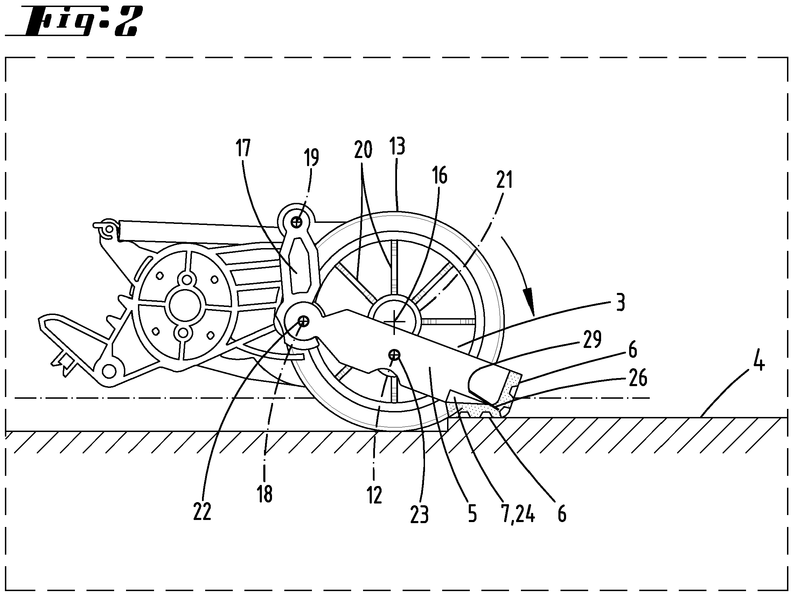

Damit das Bodenbearbeitungsgerät 1 in Verfahrrichtung flache Hindernisse 4, wie beispielsweise die in Figur 1 dargestellte Türschwelle, überwinden kann, weist das Bodenbearbeitungsgerät 1 einen Steighebel 3 auf, dessen Funktionsweise zunächst mit Bezug auf Figur 2 näher erläutert wird.

Figur 2 zeigt eine Seitenansicht eines Rades 13 des Bodenbearbeitungsgerätes 1. An dem Rad 13 ist ein Steighebel 3 befestigt, welcher bevorzugt einer Breitseite des Rades 13 zugeordnet und an einer Schwenkachse 12 des Rades 13 gelagert ist. Das Rad 13 weist in üblicher Art und Weise eine Nabe 21 und daran angeordnete Speichen 20 auf. Die Nabe 21 lagert eine Radachse 16 des Rades 13. Dem Rad 13 können ein oder zwei solcher Steighebel 3 zugeordnet sein. Der Steighebel 3 ist als langgestrecktes Flächenteil gebildet und an dem Rad 13 exzentrisch zu der Radachse 16 schwenkbar gelagert. Die Schwenkachse 12 des Steighebels 3 ist auf einer konzentrisch zu der Radachse 16 ausgerichteten Kreislinie des Rades 13 angeordnet, welche Kreislinie einen Durchmesser aufweist, welcher hier beispielsweise einem Fünftel bis einem Sechstel des Raddurchmessers entspricht. Ausgehend von der Schwenkachse 12 ragt der Steighebel 3 frei in Fahrtrichtung des Bodenbearbeitungsgerätes 1 nach vorne. Dieser freie Endbereich entspricht ausgehend von der Schwenkachse 12 beispielsweise dem 0,5- bis 0,6-Fachen des Raddurchmessers. In hierzu entgegengesetzter Richtung erstreckt sich der Steighebel 3 bevorzugt in Verlängerung des frei auskragenden Endbereiches, wobei der Endbereich über ein Verbindungslager 22 und eine zugeordnete Verbindungsachse 18 gelenkig an einen Lenker 17 angebunden ist. Der Lenker 17 ist wiederum schwenkbeweglich an einer Lenkerachse 19 an dem Bodenbearbeitungsgerät 1 gelagert. Die Lenkerachse 19 liegt bevorzugt oberhalb der Radachse 16, dies weiter bevorzugt unter paralleler Ausrichtung zu der Radachse 16, wobei weiter bevorzugt auch die Verbindungsachse 18 zwischen dem Lenker 17 und dem Steighebel 3 dazu parallel verläuft.

Der Steighebel 3 wird bevorzugt unmittelbar über das Rad 13 angetrieben, wobei der freie Endbereich des Steighebels 3 auf einer zumindest annähernd elliptischen Bahn verläuft. Der Steighebel 3 weist einen Grundkörper 5 und einen Kontaktbereich 6 auf, welcher der Anlage an einem zu überwindenden Hindernis 4 dient. Der Kontaktbereich 6 weist zunächst tendenziell nach vertikal unten, erstreckt sich weiter bevorzugt jedoch bis in einen Stirnbereich hinein. Der Kontaktbereich 6 ist hier bevorzugt durch ein Weichmaterial, beispielsweise ein gummiartiges Material gebildet. Der Grundkörper 5 besteht bevorzugt aus einem Hartkunststoff.

Durch die exzentrische Bewegung des Steighebels 3 an dem Rad 13 und die pendelnde Lagerung über den Lenker 17 wird der Kontaktbereich 6 auf einer nahezu elliptischen Bahn geführt, wobei der Steighebel 3 bei einer Bewegung des Bodenbearbeitungsgerätes 1 in einer üblichen Fortbewegungsrichtung im Zuge einer Verlagerung desselben aus einer zurückverlagerten Stellung in eine demgegenüber vorverlagerte Stellung tendenziell nach oben und vorne bewegt wird, dies weiter bevorzugt aufgrund der vorgeschlagenen exzentrischen Anlenkung oberhalb der Radachse 16. Mit Erreichen der Schwenkachse 12 in dem Bereich unterhalb der Radachse 16 wird der Steighebel 3 mit seinem freien, den Kontaktbereich 6 aufweisenden Endbereich nach unten in Richtung der befahrenen Fläche gekippt, dies unter gleichzeitigem Zurückziehen des Steighebels 3 bis in eine Rückzugsstellung, in welcher bevorzugt der freie Endbereich des Steighebels 3 innerhalb der Projektionsfläche des Rades 13 liegt. Sofern in dem Fortbewegungsweg des Bodenbearbeitungsgerätes 1 kein Hindernis 4 vorhanden ist, gelangt der Steighebel 3 nicht in Kontakt zu der befahrenen Fläche, so dass sich das Bodenbearbeitungsgerät 1 ungehindert fortbewegen kann. Sofern jedoch wie in Figur 2 dargestellt ein flaches Hindernis 4, hier beispielsweise in Form einer Türschwelle, in dem Fortbewegungsweg angeordnet ist, trifft der Steighebel 3 mit dem Kontaktbereich 6 auf das Hindernis 4. Aufgrund der weitergeführten Rotation des Rades 13 resultiert aus der reibschlüssigen Abstützung des Kontaktbereiches 6 auf dem Hindernis 4 ein Anheben des Rades 13 und somit auch des gesamten Bodenbearbeitungsgerätes 1. In der weitergeführten Bewegung des Steighebels 3 zieht dieser das Rad 13 gegebenenfalls an das Hindernis 4 heran, so dass das Rad 13 ab einem geeigneten Anschnittwinkel auf das Hindernis 4 auffahren kann.

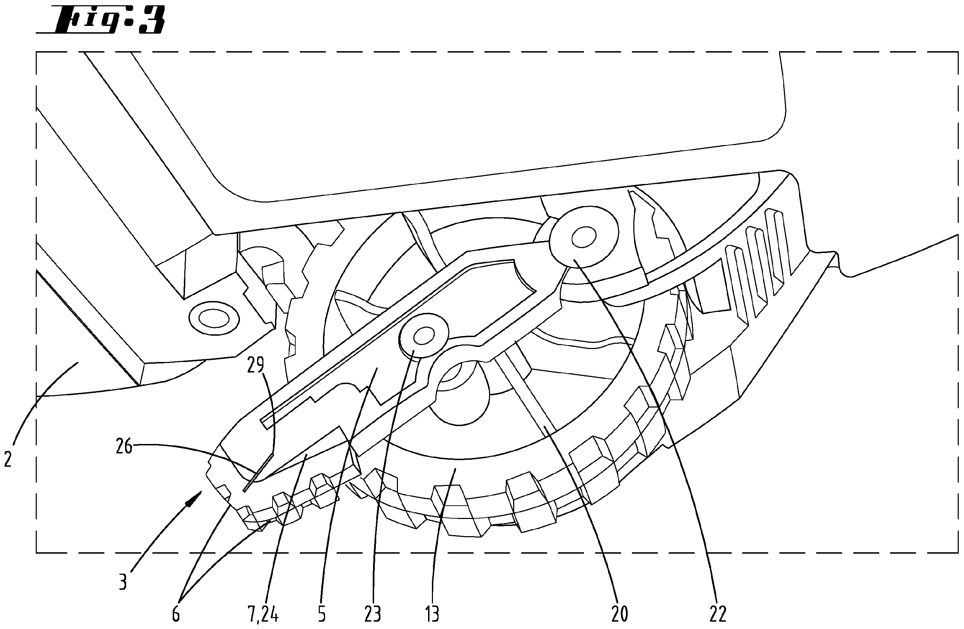

Im Folgenden werden verschiedene Ausführungsformen eines Steighebels 3 des Bodenbearbeitungsgerätes 1 mit Bezug zu den Figuren 3 bis 8 näher erläutert.

Figur 3 zeigt eine erste mögliche Ausführungsform eines Steighebels 3. Der Steighebel 3 weist einen Grundkörper 5 und einen Kontaktbereich 6 auf. Zwischen dem Grundkörper 5 und dem Kontaktbereich 6 ist ein Federelement 7 angeordnet, welches die Form eines Keils 24 aufweist. Das Federelement 7 besteht aus einem elastischen Material, hier beispielsweise Zellkautschuk. Der Kontaktbereich 6 folgt der Kontur des Grundkörpers 5 sowie der Kontur des Keils 24, wobei der Kontaktbereich 6 eine Form eines L aufweist, dessen Schenkel in einem Winkel größer als 90° zueinander stehen. Der Kontaktbereich 6 ist nicht fest mit dem Grundkörper 5 bzw. dem Federelement 7 verbunden, sondern relativ zu diesen verlagerbar. Der Kontaktbereich 6 ist mittels eines um eine Achse 29 schwenkbaren Schwenkarms 26 mit dem Grundkörper 5 verbunden. Die Achse 29 gibt eine Krafteinleitungslinie des Steighebels 3 vor. Durch die Achse 29 wird eine Verlagerung des Kontaktbereiches 6 relativ zu dem Grundkörper 5 des Steighebels 3 möglich, welche der Schwenkbewegung des Steighebels 3 an dem Rad 13 folgt. Grundsätzlich ist es auch möglich, den Grundkörper 5 und das Federelement 7 oder das Federelement 7 und den Kontaktbereich 6 einteilig auszubilden, wobei der Kontaktbereich 6 vorzugsweise gleichzeitig als Federelement 7 mit elastischen Eigenschaften ausgestattet ist und formkorrespondierend an die Kontur des Grundkörpers 5 und/oder ein Hindernis 4 angelegt werden kann. Ein separates Federelement 7 zur Zwischenanordnung zwischen dem Grundkörper 5 und dem Kontaktbereich 6 kann somit grundsätzlich entfallen. Wesentlich ist, dass der Kontakt mit einer Hindernisoberfläche nicht mehr nur linienförmig stattfindet, sondern über eine größere Berührungsfläche, so dass die Kraftübertragung von dem Steighebel 3 auf das Hindernis 4 optimiert wird.

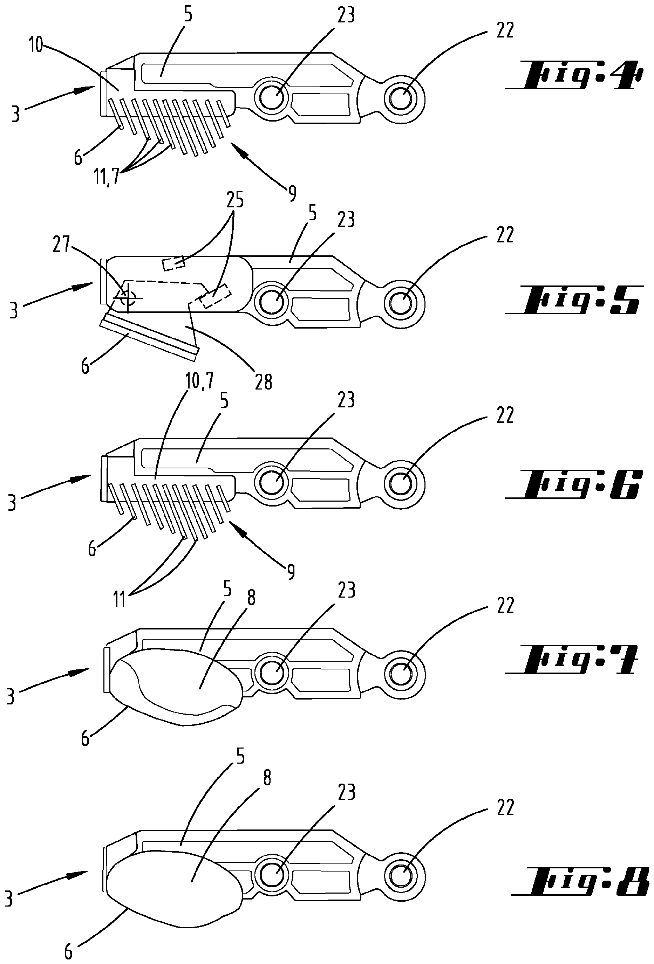

Figur 4 zeigt eine weitere mögliche Ausführungsform eines erfindungsgemäßen Steighebels 3. Dieser Steighebel 3 weist wiederum einen Grundkörper 5 und einen Kontaktbereich 6 auf, wobei der Kontaktbereich 6 ein Borstenelement 9 mit einem Trägerkörper 10 und darin verankerten Borsten 11 aufweist. Die Borsten 11 sind gemäß dieser Ausführungsform aus einem elastischen Kunststoff ausgebildet, so dass die Borsten 11 gleichzeitig ein Federelement 7 im Sinne der Erfindung darstellen. Der Trägerkörper 10 ist demgegenüber aus einem starren Kunststoff ausgebildet, kann grundsätzlich jedoch auch einen Teil des Federelementes 7 bilden. Die Borsten 11 sind hier vorzugsweise gegen die Fortbewegungsrichtung des Bodenbearbeitungsgerätes 1 geneigt. Dieser Neigungsrichtung folgend können die Borsten 11 des Weiteren gebogen werden, wobei diese in Gegenrichtung jedoch vorzugsweise blockieren. Die Borsten 11 können als Kunststoffborsten mit einem Durchmesser von beispielsweise 0,1 mm bis 0,2 mm ausgebildet sein. Jedoch sind auch stabilere Ausbildungen möglich, beispielsweise in der Form von Kunststoffstreifen mit einer Breite von mehreren Millimetern, wobei die Längsseite der Streifen vorzugsweise quer zu der Fortbewegungsrichtung des Bodenbearbeitungsgerätes 1 orientiert ist. Es ist auch denkbar, die Borsten 11 in Borstenbüscheln zusammenzufassen. Der Kontaktbereich 6 des Steighebels 3 ist durch die freien Enden der Borsten 11 gebildet.

Figur 5 zeigt eine weitere Ausführungsform eines Steighebels 3, welcher einen Grundkörper 5 und einen Gelenkfuß 28 aufweist, der über eine Gelenkachse 27 schwenkbeweglich an dem Grundkörper 5 gelagert ist. Der Gelenkfuß 28 trägt einen Kontaktbereich 6. Dem Gelenkfuß 28 sind zwei Anschläge 25 zugeordnet, die den möglichen Schwenkwinkel des Gelenkfußes 28 um die Gelenkachse 27 begrenzen. Dem Gelenkfuß 28 kann ein Federelement 7 (nicht dargestellt) zugeordnet sein, welches den Gelenkfuß 28 von dem Grundkörper 5 wegzuschwenken sucht. Wenn der Steighebel 3 mit dem Gewicht des Bodenbearbeitungsgerätes 1 belastet auf einer Fläche bzw. einem Hindernis 4 steht, wird das Federelement 7 entgegen seiner Rückstellkraft komprimiert. Der Kontaktbereich 6 kann vorzugsweise einteilig mit dem Gelenkfuß 28 ausgebildet sein. Insbesondere kann der Kontaktbereich 6 aus einem elastischen Material an den Gelenkfuß 28 angespritzt sein. Durch die Elastizität des Kontaktbereiches 6 wird eine Reibkraft zwischen dem Kontaktbereich 6 und der Fläche bzw. dem Hindernis 4 erhöht.

Figur 6 zeigt eine Ausführungsform eines Steighebels 3, welche der Ausführungsform gemäß Figur 4 ähnelt. Der Steighebel 3 weist auch gemäß Figur 6 ein Borstenelement 9 mit einem Trägerkörper 10 und Borsten 11 auf. Gemäß dieser Ausgestaltung sind die Borsten 11 jedoch starr ausgebildet, während der Trägerkörper 10 gleichzeitig das Federelement 7 bildet. Die Borsten 11 befinden sich somit in einem elastischen Trägermaterial, welches eine Verlagerung des durch die freien Enden der Borsten 11 gebildeten Kontaktbereiches 6 erlaubt. Die Borsten 11 verändern ihre Form nicht, sondern können sich aufgrund der Verformbarkeit des Trägerkörpers 10 relativ zu dem Grundkörper 5 verlagern bzw. an ein Hindernis 4 anpassen.

Die Figuren 7 und 8 zeigen schließlich zwei Ausführungsformen von Steighebeln 3, die ein Kissenelement 8 beinhalten. Das Kissenelement 8 ist hier beispielsweise ein Luftkissen oder ein Gelkissen, kann jedoch auch aus einem Vollgummi oder anderen elastischen Materialien hergestellt sein, die sich bei Belastung mit dem Gewicht des Bodenbearbeitungsgerätes 1 an die Form eines Hindernisses 4 anpassen. Das Kissenelement 8 weist gemäß der Ausführungsform in Figur 7 einen Kontaktbereich 6 aus einem Material auf, welches sich von den übrigen Teilbereichen des Kissenelementes 8 unterscheidet. Insbesondere ist das Material des Kontaktbereiches 6 elastisch und widerstandsfähig, während das Kissenelement 8 im Übrigen aus einem Material ausgebildet sein kann, welches elastischer ist als das Material des Kontaktbereiches 6. Figur 8 zeigt demgegenüber ein Kissenelement 8 aus nur einer Materialkomponente. Dort ist ein Kompromiss bezüglich des Materials zu schaffen, so dass der Kontaktbereich 6 einerseits widerstandsfähig ist, jedoch gleichzeitig auch elastisch ist, so dass sich das Kissenelement 8 mit dem Kontaktbereich 6 an ein Hindernis 4 anpassen kann.

**Liste der Bezugszeichen**

| | | | |
|---|---|---|---|
| 1 | Bodenbearbeitungsgerät | 26 | Schwenkarm |
| 2 | Gehäuse | 27 | Gelenkachse |
| 3 | Steighebel | 28 | Gelenkfuß |
| 4 | Hindernis | 29 | Achse |
| 5 | Grundkörper | | |
| 6 | Kontaktbereich | | |
| 7 | Federelement | | |
| 8 | Kissenelement | | |
| 9 | Borstenelement | | |
| 10 | Trägerkörper | | |
| 11 | Borste | | |
| 12 | Schwenkachse | | |
| 13 | Rad | | |
| 14 | Reinigungselement | | |
| 15 | Abstandsmesseinrichtung | | |
| 16 | Radachse | | |
| 17 | Lenker | | |
| 18 | Verbindungsachse | | |
| 19 | Lenkerachse | | |
| 20 | Speiche | | |
| 21 | Nabe | | |
| 22 | Verbindungslager | | |
| 23 | Hebellager | | |
| 24 | Keil | | |
| 25 | Anschlag | | |

## Patentansprüche

1. Sich selbsttätig fortbewegendes Bodenbearbeitungsgerät (1) mit einem Gehäuse (2) und einem relativ zu dem Gehäuse (2) verlagerbaren Steighebel (3) zur Überwindung eines Hindernisses (4), wobei der Steighebel (3) einen Grundkörper (5) und einen Kontaktbereich (6) zur Anlage an dem zu überwindenden Hindernis (4) aufweist, wobei der Steighebel (3) exzentrisch schwenkbar an einerseits einem Rad (13) des Bodenbearbeitungsgerätes (1) und andererseits dem Gehäuse (2) gelagert ist, **dadurch gekennzeichnet, dass** der Kontaktbereich (6) relativ zu dem Grundkörper (5) des Steighebels (3) verlagerbar ist, nämlich schwenkbar an einer Achse (27, 29) des Grundkörpers (5) gelagert ist.

2. Bodenbearbeitungsgerät (1) nach Anspruch 1, **dadurch gekennzeichnet, dass** der Steighebel (3) zwischen dem Kontaktbereich (6) und dem Grundkörper (5) ein eine Federkraft bereitstellendes Federelement (7) aufweist.

3. Bodenbearbeitungsgerät (1) nach Anspruch 2, **dadurch gekennzeichnet, dass** eine Rückstellkraft des Federelementes (7) ausgehend von dem Grundkörper (5) in Richtung des Kontaktbereiches (6) gerichtet ist.

4. Bodenbearbeitungsgerät (1) nach einem der vorhergehenden Ansprüche, **dadurch gekennzeichnet, dass** der Steighebel (3) zwischen dem Kontaktbereich (6) und dem Grundkörper (5) ein durch mechanische Belastung verformbares Kissenelement (8), insbesondere ein Luftkissen oder Gelkissen, aufweist.

5. Bodenbearbeitungsgerät (1) nach einem der vorhergehenden Ansprüche, **dadurch gekennzeichnet, dass** der Kontaktbereich (6) ein flexibles Material aufweist.

6. Bodenbearbeitungsgerät (1) nach einem der Ansprüche 2 bis 5, **dadurch gekennzeichnet, dass** der Kontaktbereich (6) ein integraler Teilbereich des Kissenelementes (8) oder Federelementes (7) ist oder fest mit dem Kissenelement (8) oder Federelement (7) verbunden ist.

7. Bodenbearbeitungsgerät (1) nach einem der vorhergehenden Ansprüche, **dadurch gekennzeichnet, dass** der Kontaktbereich (6) Teil eines Borstenelementes (9) mit an einem Trägerkörper (10) befestigten Borsten (11) ist, wobei der Trägerkörper (10) und/oder die Borsten (11) elastisch ausgebildet sind und/oder der Trägerkörper (10) ein durch mechanische Belastung verformbares Kissenelement (8) oder Federelement (7) ist.

8. Bodenbearbeitungsgerät (1) nach einem der Ansprüche 2 bis 7, **dadurch gekennzeichnet, dass** das Federelement (7) ein zwischen dem Grundkörper (5) und dem Kontaktbereich (6) angeordneter elastischer Keil (24) ist.

## Claims

1. An automatically moving floor processing device (1) with a housing (2) and an adjusting lever (3) that can be displaced relative to the housing (2) for overcoming an obstacle (4), wherein the adjusting lever (3) has a base body (5) and a contact area (6) for contacting the obstacle (4) to be overcome, wherein the adjusting lever (3) is mounted so that it can eccentrically swivel on a wheel (13) of the floor processing device (1) on the one hand and on the housing (2) on the other, **characterized in that** the contact area (6) is displaceable relative to the base body (5) of the adjusting lever (3), specifically pivotably mounted on an axis (27, 29) of the base body (5).

2. The floor processing device (1) according to claim 1, **characterized in that** the adjusting lever (3) has a spring element (7) that provides a spring force between the contact area (6) and the base body (5).

3. The floor processing device (1) according to claim 2, **characterized in that** a restoring force of the spring element (7) is directed toward the contact area (6) proceeding from the base body (5).

4. The floor processing device (1) according to one of the preceding claims, **characterized in that** the adjusting lever (3) has a cushion element (8) that can be deformed by a mechanical load, in particular an air cushion or gel cushion, between the contact area (6) and the base body (5).

5. The floor processing device (1) according to one of the preceding claims, **characterized in that** the contact area (6) has a flexible material.

6. The floor processing device (1) according to one of claims 2 to 5, **characterized in that** the contact area (6) is an integral partial area of the cushion element (8) or spring element (7), or rigidly connected with the cushion element (8) or spring element (7).

7. The floor processing device (1) according to one of the preceding claims, **characterized in that** the contact area (6) is part of a bristle element (9) with bristles (11) secured to a carrier body (10), wherein the carrier body (10) and/or the bristles (11) are elastic in design, and/or the carrier body (10) is a cushion element (8) or spring element (7) that can be deformed under a mechanical load.

8. The floor processing device (1) according to one of claims 2 to 7, **characterized in that** the spring element (7) is an elastic wedge (24) arranged between the base body (5) and the contact area (6).

## Revendications

1. Dispositif de traitement du sol (1) à déplacement automatique, avec un boîtier (2) et un levier de montée (3) déplaçable par rapport au boîtier (2) pour surmonter un obstacle (4), dans lequel le levier de montée (3) présente un corps de base (5) et une zone de contact (6) pour l'appui contre l'obstacle (4) à surmonter, dans lequel le levier de montée (3) est monté pivotant de manière excentrique d'une part sur une roue (13) du dispositif de traitement du sol (1) et d'autre part sur le boîtier (2), **caractérisé en ce que** la zone de contact (6) est déplaçable par rapport au corps de base (5) du levier de montée (3), à savoir est montée pivotante à un axe (27, 29) du corps de base (5).

2. Dispositif de traitement du sol (1) selon la revendication 1, **caractérisé en ce que** le levier de montée (3) comporte un élément de ressort (7) fournissant une force de ressort entre la zone de contact (6) et le corps de base (5).

3. Dispositif de traitement du sol (1) selon la revendication 2, **caractérisé en ce qu'**une force de rappel de l'élément de ressort (7) est dirigée à partir du corps de base (5) en direction de la zone de contact (6).

4. Dispositif de traitement du sol (1) selon l'une des revendications précédentes, **caractérisé en ce que** le levier de montée (3) présente entre la zone de contact (6) et le corps de base (5) un élément de coussin (8), en particulier un coussin d'air ou de gel, qui est déformable par une charge mécanique.

5. Dispositif de traitement du sol (1) selon l'une des revendications précédentes, **caractérisé en ce que** la zone de contact (6) comprend un matériau flexible.

6. Dispositif de traitement du sol (1) selon l'une des revendications 2 à 5, **caractérisé en ce que** la zone de contact (6) est une zone partielle formant partie intégrante de l'élément de coussin (8) ou de l'élément de ressort (7) ou est fermement reliée à l'élément de coussin (8) ou à l'élément de ressort (7).

7. Dispositif de traitement du sol (1) selon l'une des revendications précédentes, **caractérisé en ce que** la zone de contact (6) fait partie d'un élément à poils (9) avec des poils (11) fixés sur un corps de support (10), le corps de support (10) et/ou les poils (11) étant formés de manière élastique et/ou le corps de support (10) étant un élément de coussin (8) ou un élément de ressort (7) déformable par une charge mécanique.

8. Dispositif de traitement du sol (1) selon l'une des revendications 2 à 7, **caractérisé en ce que** l'élément à ressort (7) est un coin élastique (24) agencé entre le corps de base (5) et la zone de contact (6).
